# EUROPEAN PATENT APPLICATION

(11) **EP 4 528 102 A1**
(43) Date of publication of application: **26.03.2025**
(21) Application number: 24194465.1
(22) Date of filing: 14.08.2024
(51) Int. Cl.: F03G 7/10, F16H 25/04

(54) **SHIFTING SHAFT MECHANISM**

(30) Priority: 25.09.2023 US 202363540215 P
(71) Applicant: Smiljanic, Momcilo, 11400 Mladenovac (RS)
(72) Inventor: Smiljanic, Momcilo, 11400 Mladenovac (RS)
(74) Representative: Algemeen Octrooi- en Merkenbureau B.V.

(57) **Abstract**

The present invention is a shifting shaft mechanism which may be used with a gravitation engine to enable the gravitation engine to utilize the force of gravitation. The shifting shaft mechanism comprises a shaft, on each side of which shaft is at least one camshaft rotatably connected to the shaft and positioned between at least two fixed plates connected to each other, each of which fixed plates has an off-centre fixed plate opening through which the shaft passes through, and a mobile support wheel rotatably connected to the fixed plates that abuts the camshaft, and wherein when the camshaft rotates with the shaft, the mobile support wheel rotates counter to it. In an embodiment of the shifting shaft mechanism of the present invention, the each side of the shaft has two camshafts, three fixed plates, and two mobile support wheels.

## Description

### Field of the Invention

The present invention relates to a shifting shaft mechanism which may be used with a gravitation engine to enable the gravitation engine to utilize the force of gravitation.

### Background of the Invention

The force of wind in a windmill or the force of flowing water against a water wheel is a known means to create energy from naturally occurring forces. A water wheel with paddles in flowing water harnesses the energy of moving water pushing the paddles. When flowing water pours onto the top of a water wheel onto the paddles or buckets on one side of the wheel, the force creates torque and energy is produced and used, for example, to turn a shaft with a further wheel to grind wheat. Of course, a water wheel in still water will not move since there is nothing to push or tip the wheel forward, and if the wind is not blowing a windmill or wind turbine will not turn.

Gravitational force is a force that never ceases acting, and was famously described by Sir Isaac Newton, but is not much harnessed for use unlike other natural forms of energy like water, wind, and magnetism. Gravity on a free-falling mass provides acceleration at 9.8 meter/second². The gravitational force on a wheel with a weight on one side creates energy when it falls due to the force of gravity, and theoretically could run a gravitation engine.

In a gravitation engine, an imbalance like a weight on the falling side of a wheel produces torque and the energy created should push the wheel up to fall again and keep turning the wheel as in a mythical perpetual motion machine. However, in current gravitation engines the energy needed to start and keep a wheel moving plus the friction on the parts overcomes the force of gravity and does not create additional energy or perpetual motion. Additional energy is needed to keep the wheel of current gravitation engines moving.

What is needed is a mechanism to utilize the unlimited force of gravitation to produce more energy than the energy needed to keep the mechanism running.

### Summary of the Invention

In an embodiment of the present invention there is a shifting shaft mechanism which may be used with a gravitation engine.

In a further embodiment of the present invention there is a shifting shaft mechanism comprising a shaft with two ends and a centre, on each side of which shaft is at least one camshaft rotatably connected to the shaft and positioned between at least two fixed plates connected to each other, each of which fixed plates has an off-centre fixed plate opening through which the shaft passes through, and a mobile support wheel for each of the at least one camshaft rotatably connected to the fixed plates that abuts each of the at least one camshaft, and wherein when the camshaft rotates with the shaft, the mobile support wheel rotates counter to it.

In a further embodiment of the present invention the camshaft of the shifting shaft mechanism is shaped so that as it rotates counter to the mobile support wheel the shaft will rise and fall within the off-centre fixed plate opening.

In a further embodiment of the present invention of the shifting shaft mechanism, the each side of the shaft has two of the at least one camshaft, three of the at least two fixed plates, and two of the mobile support wheel.

In a further embodiment of the present invention, the shifting shaft mechanism additionally comprises a fixed plate bearing abutting each of the at least one camshaft at the side closer to wither of the two ends of the shaft.

In a further embodiment of the present invention, the shifting shaft mechanism additionally comprises a plurality of fixed plate mobile support holes in each fixed plate, and wherein the mobile support wheel is connected to the fixed plates though a mobile support wheel axle inserted through one of the plurality of fixed plate mobile support holes in alignment with each fixed plate.

In a further embodiment of the present invention, the shifting shaft mechanism additionally comprises a hub connected to the center of the shaft, which hub has a plurality of spokes attached to a rotating wheel, and which rotating wheel additionally comprises a weight on it.

The present invention includes the use of the shifting shaft mechanism described above.

In a further embodiment of the present invention there is a gravitation engine comprising the shifting shaft mechanism described above.

### Brief Description of the Figures

These and other aspects of the new invention will be apparent from the brief description of the drawings and the following detailed description in which:
FIGURE 1 is a side perspective view of an embodiment of a shifting shaft mechanism of the present invention.
FIGURE 2 is a side perspective view of the shifting shaft mechanism of Figure 1 with a fixed plate removed at each end.
FIGURE 3 is a cross-sectional side view of the shifting shaft mechanism of Figure 1.
FIGURE 4a is a back view of a camshaft, a mobile support wheel and a fixed plate of the shifting shaft mechanism of Figure 2 viewed from one plate in from a hub side in first position with the camshaft at 0 degrees.
FIGURE 4b is a back view of the camshaft, mobile support wheel and fixed plate of Figure 4a in second position with the camshaft at 90 degrees.
FIGURE 4c is a back view of the camshaft, mobile support wheel and fixed plate of Figure 4a in third position with the camshaft at 180 degrees.
FIGURE 4d is a back view of a camshaft, mobile support wheel and fixed plate of a further embodiment of a shifting shaft mechanism viewed from the second plate from the hub side in second position with the camshaft at 90 degrees.
FIGURE 4e is a back view of the camshaft, mobile support wheel and fixed plate of the shifting shaft mechanism of Figure 4d viewed from the third plate from the hub side.
FIGURE 5a is an embodiment of a simplified gravitation engine with the shifting shaft mechanism of Figure 1 in the first position mounted on a frame.
FIGURE 5b is the gravitation engine of Figure 5a without the frame.
FIGURE 6a is a back view of a fixed plate from the hub side of the shifting shaft mechanism of Figure 1.
FIGURE 6b is a back view of the fixed plate of Figure 6a showing measurements for mobile support wheel positions.
FIGURE 6c is a back view of an embodiment of a camshaft of a shifting shaft mechanism of the present invention.
FIGURE 6d is a back view of a further embodiment of a camshaft of a shifting shaft mechanism of the present invention
FIGURE 7 is a side view of an embodiment of half of a shaft of the present invention with measurements.
FIGURE 8a is a perspective view of an embodiment of the hub of the present invention.
FIGURE 8b is a cross-sectional view of the hub of Figure 8a with measurements.
FIGURE 9 is a cross-sectional view of an embodiment of a mobile support wheel with measurements.
FIGURE 10 is a side view of an embodiment of a frame of the present invention with measurements.
FIGURE 11 is a cross-sectional view of an embodiment of a fixed plate bearing of the present invention.

### Detailed Description of the Invention

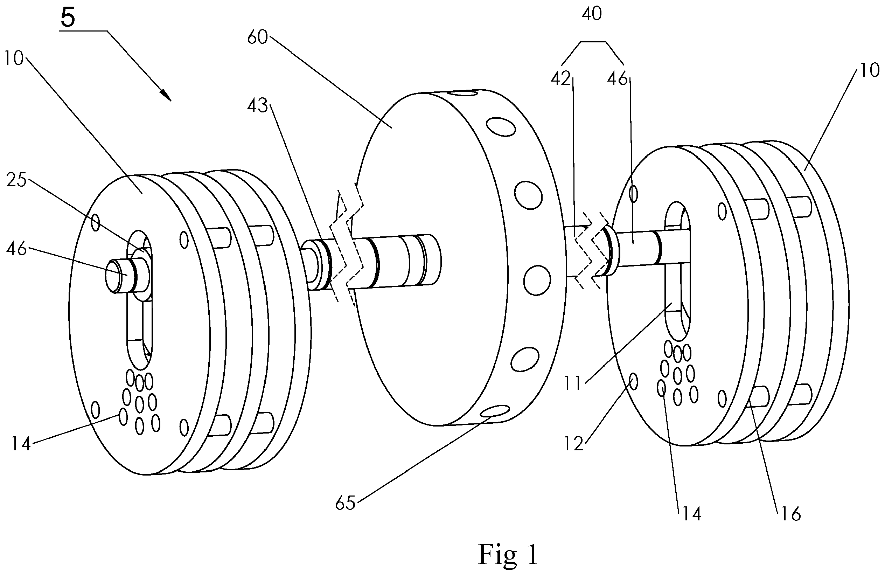

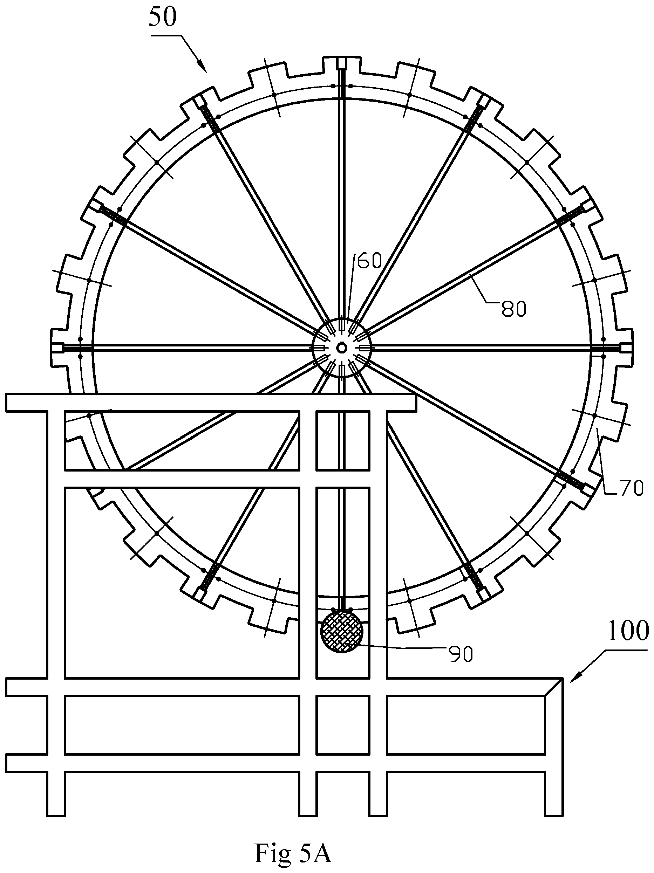

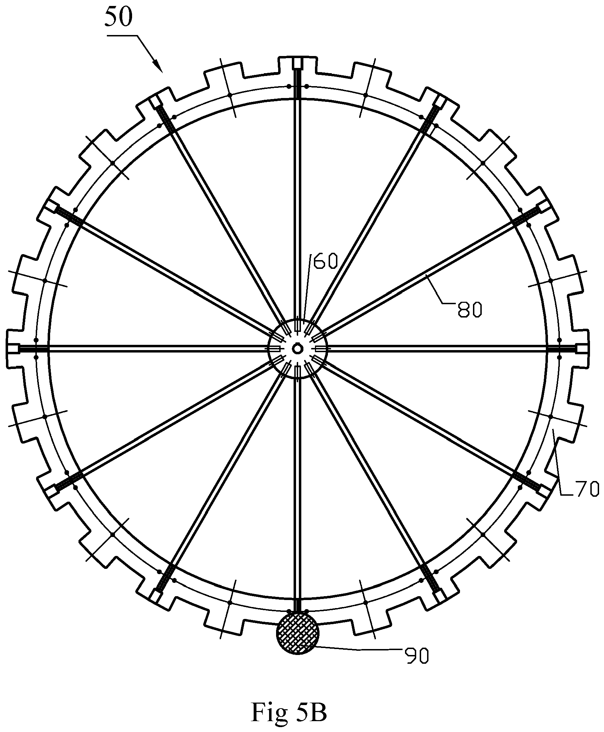

The present invention is a shifting shaft mechanism 5 which utilizes the force of gravity to generate energy shown in Figure 1. The shifting shaft mechanism 5 could be used to enable a gravitation engine 50 shown in Figures 5a and 5b to utilize the force of gravitation to create more energy than the energy needed to keep the gravitation engine running.

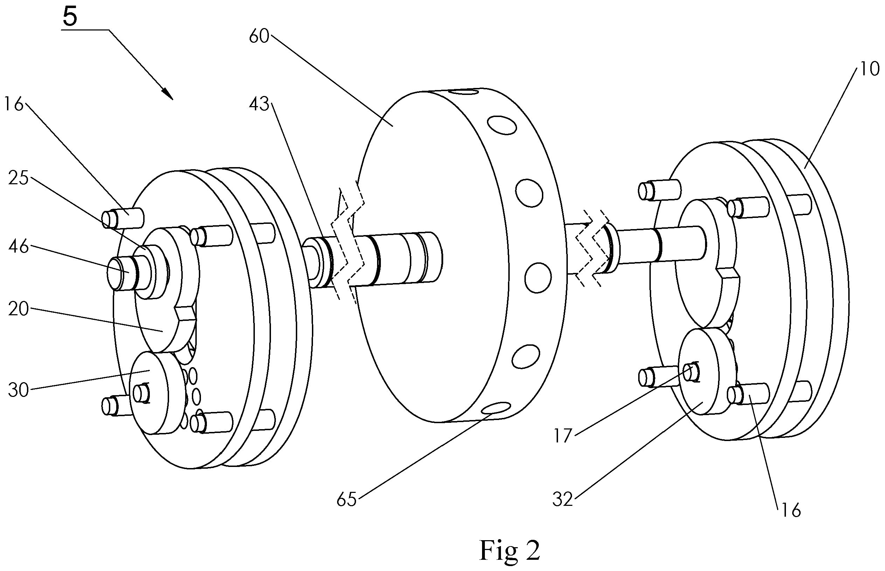

In an embodiment of the shifting shaft mechanism 5 shown in Figures 1, 2 and 3, the shaft 40 comprises an inner shaft 42 and an outer shaft 46. As shown in Figures 1, 2 (not including one fixed plate 10 on either end in order to see the inner mechanism) and 3, the shifting shaft mechanism 5 of an embodiment of the present invention comprises, at each end of the shaft 40, at least one camshaft 20 rotatably connected to the outer shaft 46 and positioned between at least two of the fixed plate 10 each with an off-centre fixed plate opening 11 through which the outer shaft 46 passes. For each camshaft 20 there is a mobile support wheel 30 rotatably connected to the fixed plates 10 on either side of the mobile support wheel 30. In this embodiment shown in the figures, on each side of the shaft 40 there are three fixed plates 10, two camshafts 20, and two mobile support wheels 30.

The mobile support wheel 30 abuts the camshaft 20, and when the camshaft rotates the mobile support wheel 30 rotates counter to it. The camshaft 20 is shaped so that as it rotates counter to the mobile support wheel 30 the shaft 40 will rise and fall within the off-centre fixed plate opening 11. In this embodiment the camshaft 20 is comma shaped. The diameter of the outer shaft 46 is less than the fixed plate opening 11 so that the shaft 40 may rise and fall.

The shifting shaft mechanism 5 may additionally comprise a hub 60 with hub spoke holes 65 rotatably connected to an inner shaft 42 in the center of the shaft 40. The hub allows connection to a rotating wheel (shown in Figures 5a and 5b).

In this embodiment the inner shaft 42 has a greater diameter, is longer than an outer shaft 46, and holds the hub 60. It will be understood that the shaft 40 could be of uniform diameter throughout and the length is adjustable depending on the energy needed and/or the size of the gravitation engine. In this embodiment, on each side of the outer shaft 46, in order starting from the hub side, there is: a fixed plate 10; camshaft 20 and mobile support wheel 30; fixed plate 10; camshaft 20 and mobile support wheel 30; and fixed plate 10 and fixed plate bearing 25.

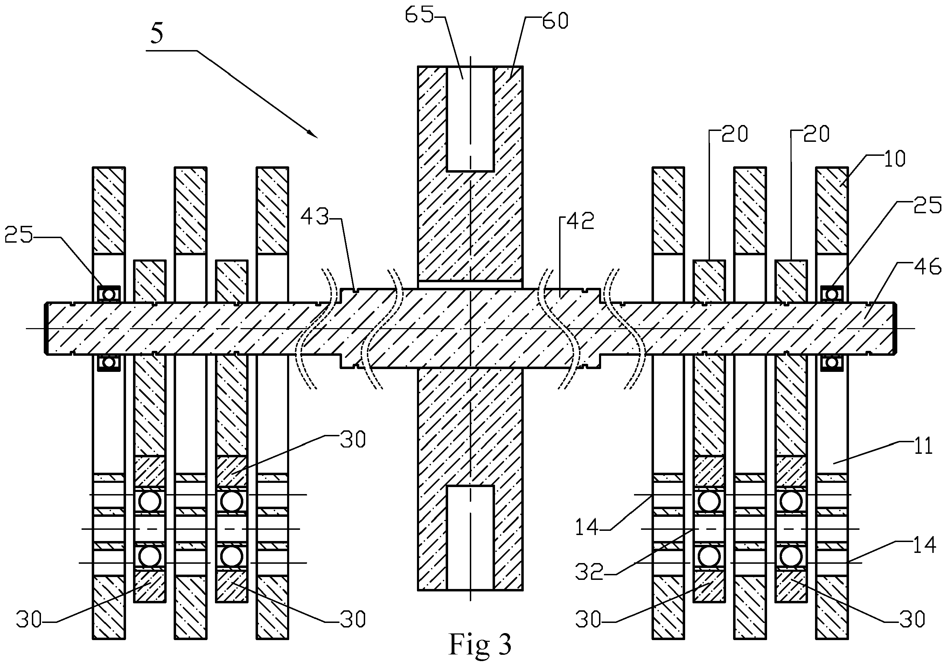

On each side, the three fixed plates 10 are connected by four spacers 16 (not shown in Figure 3) which fit through fixed plate spacer holes 12 on the outer circumference of each fixed plate 10. The size of the off-centre fixed plate opening 11 in each fixed plate 10 allows the outer shaft 46 to move up and down, and the fixed plate bearing 25 can roll up and down the interior of the off-centre fixed plate opening 11. Each mobile support wheel 30 is attached to the fixed plates 10 on either side of the mobile support wheel 30 by a mobile support wheel axle 17 (not shown in Figure 3) which extends from one of the fixed plate mobile support holes 14 in a fixed plates 10 through the mobile support wheel hole 32 to one of the fixed plate mobile support holes 14 in an adjacent fixed plate on the other side of that mobile support wheel 30.

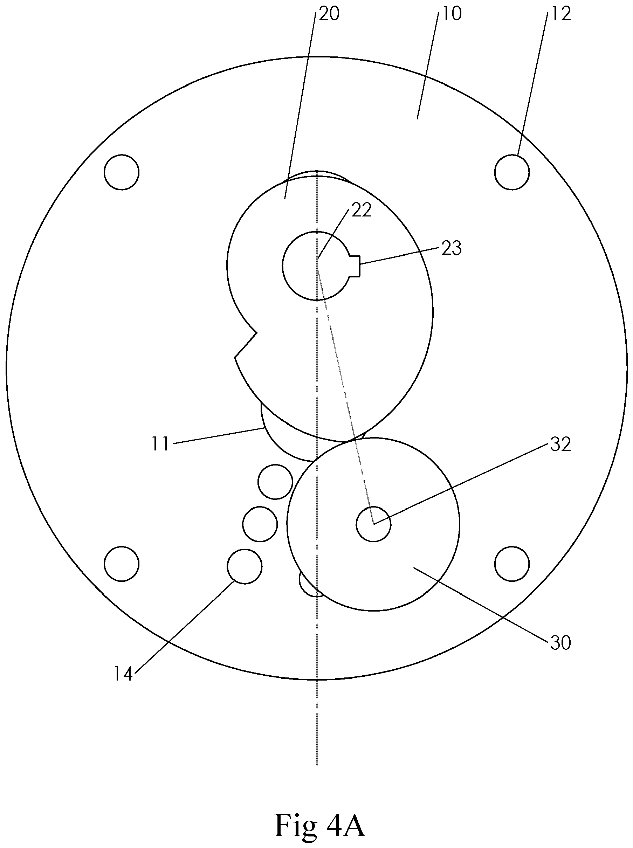

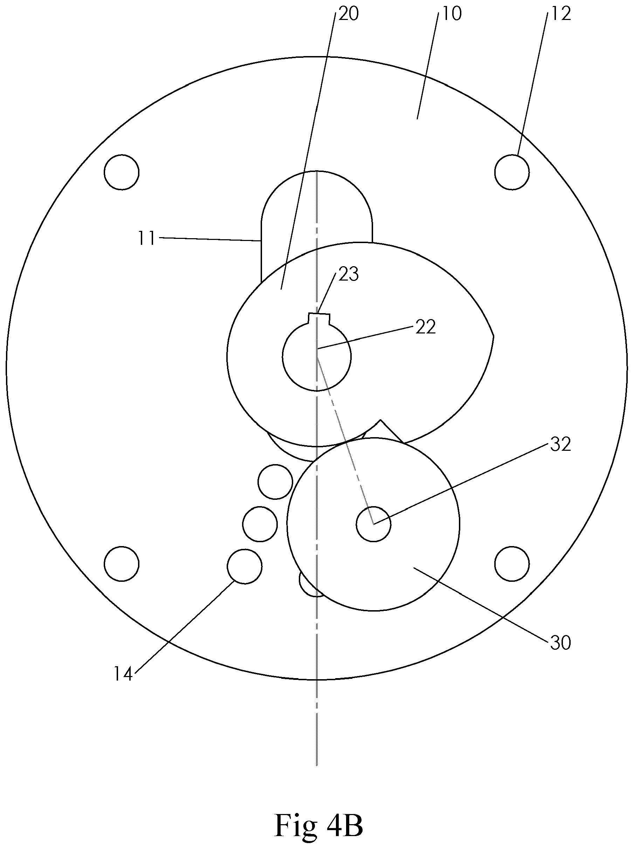

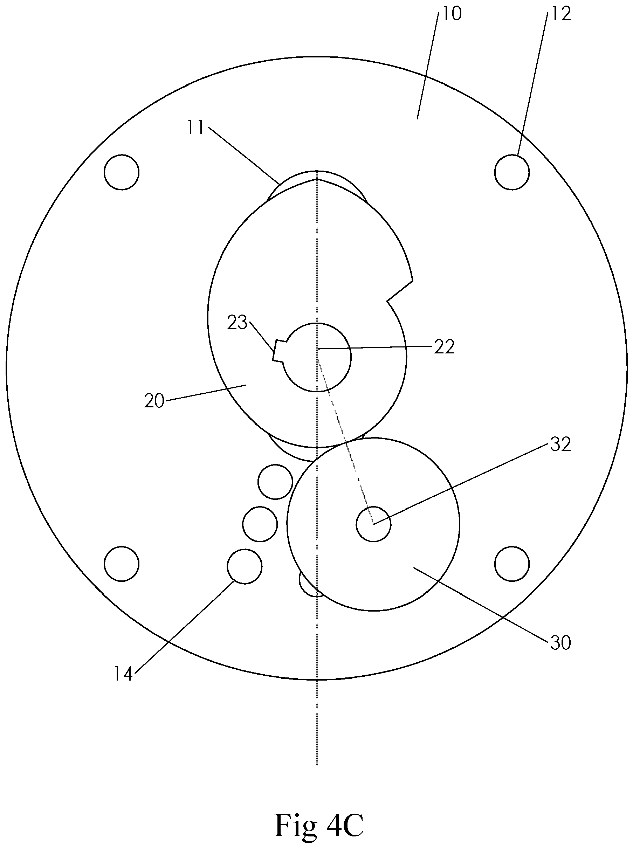

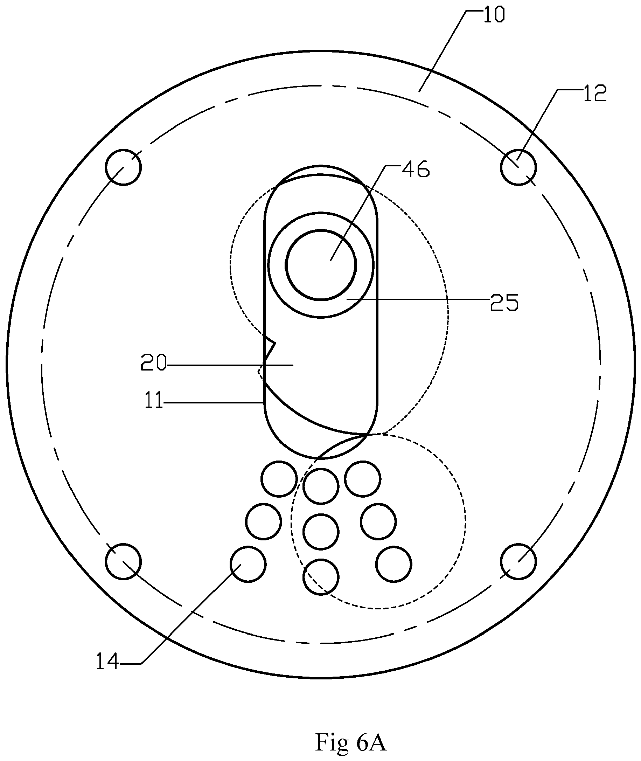

Figure 6a shows a fixed plate 10 from the hub side and the position of the outer shaft 46 and fixed plate bearing 25. Figures 4a to 4c show a camshaft 20, a mobile support wheel 30 and a fixed plate 10 of the shifting shaft mechanism 5 without the fixed plate 10 first fixed plate 10 from the hub view. The shaft 40 (not shown in Figures 4a to 4e) fits through the camshaft hole 22 which has a camshaft hole notch 23, and the mobile support wheel axle 17 (not shown) fits in the mobile support wheel hole 32. Figure 4a shows the shifting shaft mechanism 5 in a first position with the camshaft 20 at 0 degrees (which is the same as at 360 degrees). Figure 4b shows the shifting shaft mechanism 5 in a second position with the camshaft at 90 degrees. Figure 4c shows the shifting shaft mechanism 5 in a third position with the camshaft at 180 degrees. It will be understood that there are positions through the entire rotation of the camshaft 20 and the first, second and third position are for describing the invention. The rotation of the shaft 40 causes the camshaft 20 to rotate.

Regardless of which fixed plate mobile support hole 14 is chosen, the mobile support wheel 30 abuts the camshaft 20 and rotates counter to the rotation of the camshaft 20 which rotates with the rotation of the shaft 40. The choice of fixed plate mobile support hole 14 effects the force/power generated by the shifting shaft mechanism 5. More power is generated when moving from the fixed plate mobile support holes 14 at the top, nearest the off-centre fixed plate opening, to the bottom which provides the most power.

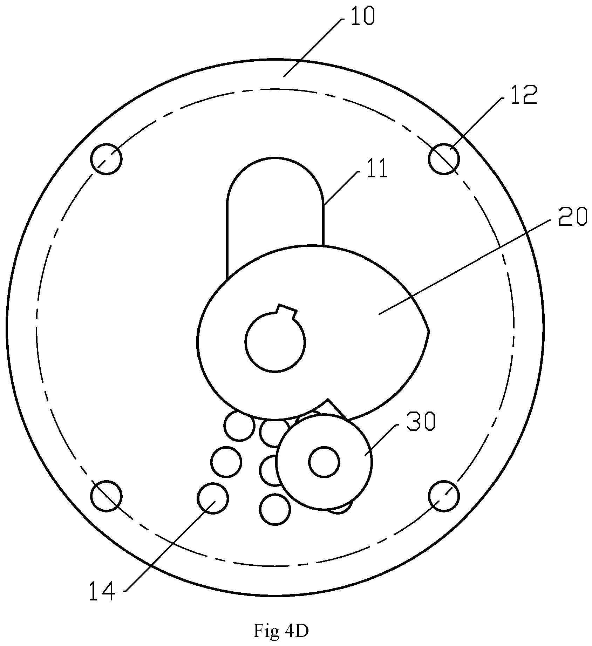

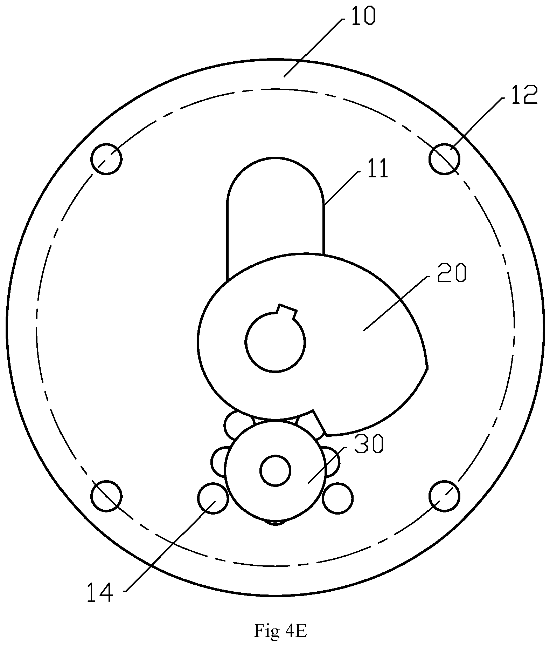

Further, more power is also generated when the mobile support hole 14 is either in an outside hole for the fixed plate 10 that is the second plate when viewed from the hub 60 side, as shown in Figure 4d, and when the mobile support hole 14 is in a middle hole for the fixed plate 10 that is the third plate when viewed from the hub 60 side, as shown in Figure 4e. And this may be duplicated on the other side of the hub 60. The mobile support wheel 30 is also smaller in Figures 4d and 4e compared to Figures 4a to 4c, which also generates more power.

Figures 5a and 5b show how the shifting shaft mechanism 5 would be used with a simplified embodiment of a gravitation engine 50. Figure 5a is shown in the third position, and Figure 5b is without the frame 100. The hub spoke holes 65 of the hub 60 are filled with a plurality of spokes 80 which attach to a rotating wheel 70. A weight 90 on the rotating wheel 70 is shown at the bottom of the rotating wheel 70 at 180 degrees.

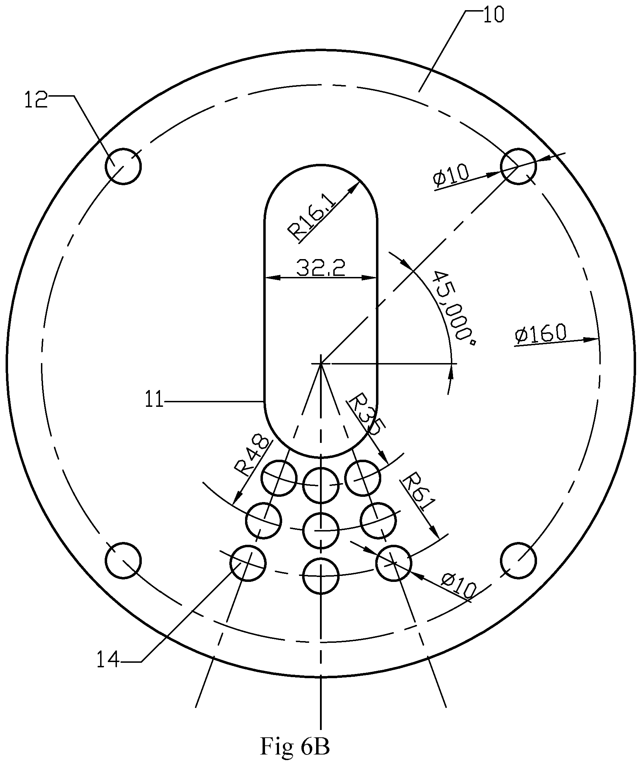

Figure 6b provides measurements for an embodiment of the shifting shaft mechanism 5 of the present invention with various possible mobile support wheel 30 positions. The R means "radius", ø is "phi", ° is degrees, and the measurement 32,2 (equivalent to 32.2) is in centimetres. It will be understood that the mobile support wheel 30 could have a fixed position and one or two fixed plate mobile support holes 14 rather than the option of setting it at any one of the plurality of fixed plate mobile support holes 14. The position of the mobile support wheel 30 affects the power created since the camshaft 20 has a different rotation depending on this position and thus a different shift of the shaft 40 down and up. The fixed plate mobile support holes 14 nearer to the off-centre fixed plate opening 11 and along the notation R61 in Figure 6b will produce less energy but more speed than the other positions moving downward which produce more energy/force and less speed.

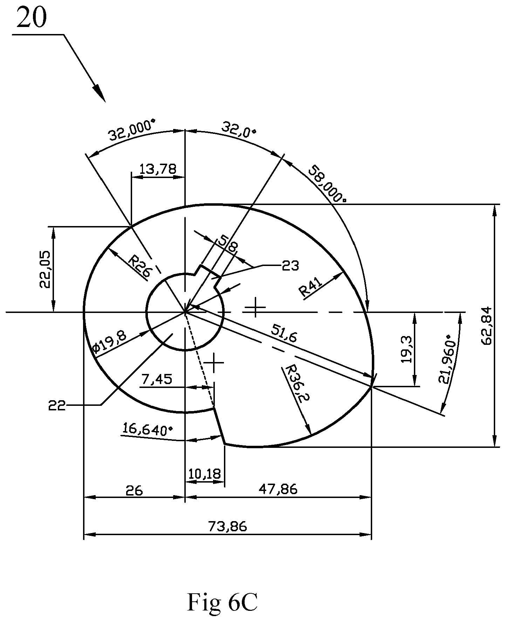

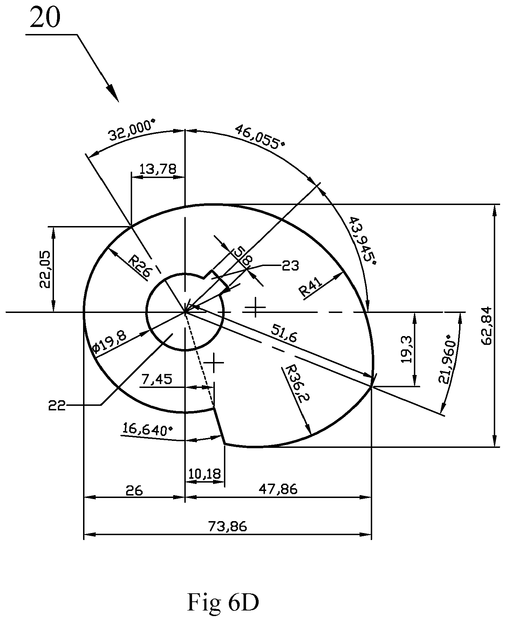

Figure 6c provides measurements for an embodiment of a camshaft 20, camshaft hole 22 and camshaft hole notch 23 of the shifting shaft mechanism 5 of the present invention, with the same symbols/units as in Figure 6b. Figure 6d provides an alternative position for the camshaft notch hole 23 which is moved an additional 14.055 degrees from the 32 degrees shown in Figure 6c. This results in more power to rotate the wheel.

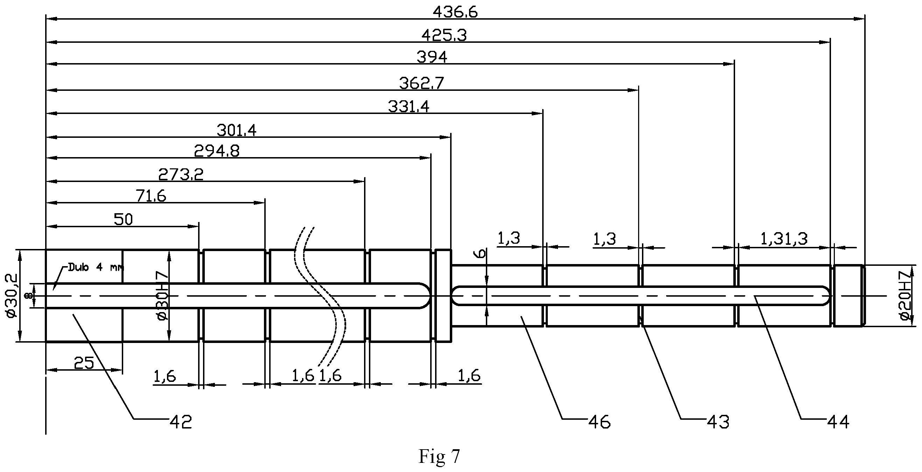

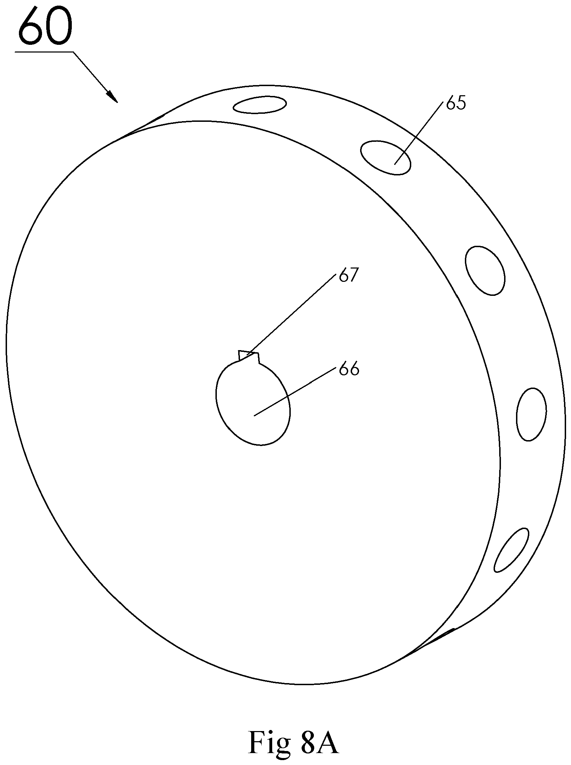

Figure 7 provides measurements for an embodiment of a shaft 40 of the present invention, with the same symbols/units as in Figure 6b and H7 is the tolerance range. The shaft 40 has usual shaft ring grooves 43 for use with retaining rings (not shown), and shaft key groove 44 for use with a machine key (not shown), which shaft key groove 44 aligns with the camshaft hole notch 23 and the central hub hole notch 67 of the hub 60 shown in Figure 8a.

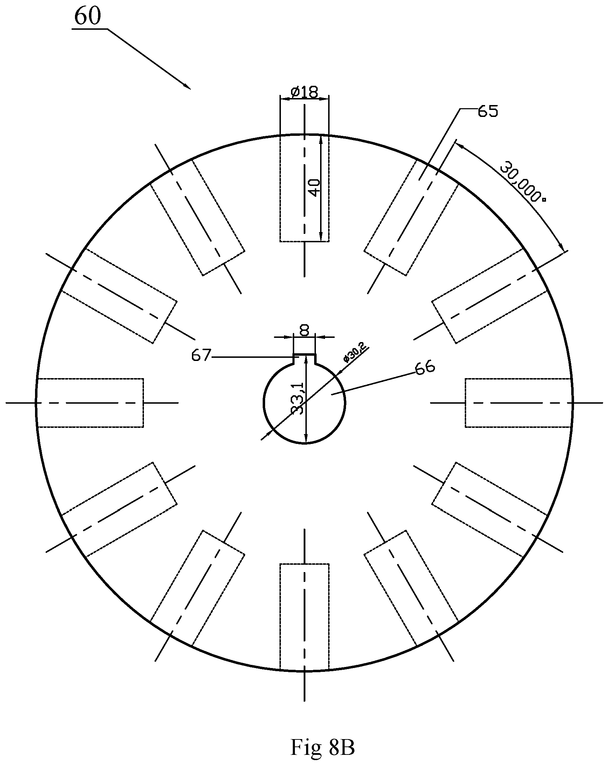

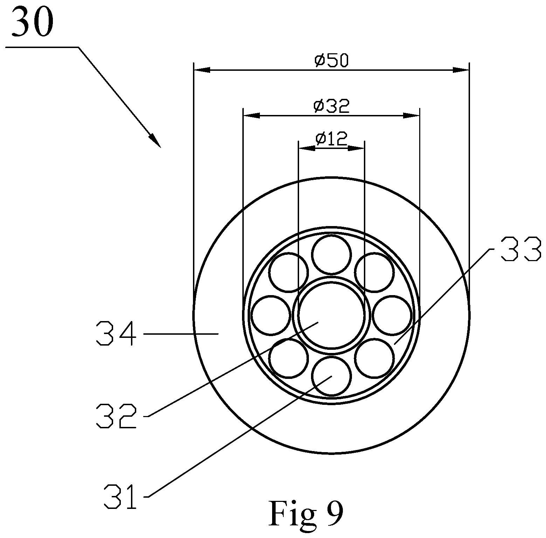

Figure 8b provides measurements for an embodiment of a hub 60, hub spoke holes 65, central hub hole 66 and central hub hole notch 67 of the present invention. Figure 9 provides measurements for an embodiment of a mobile support wheel 30, mobile support wheel hole 32, mobile support wheel inner ring 33, mobile support wheel outer ring 34 of the present invention and shows mobile support wheel ball bearings 31.

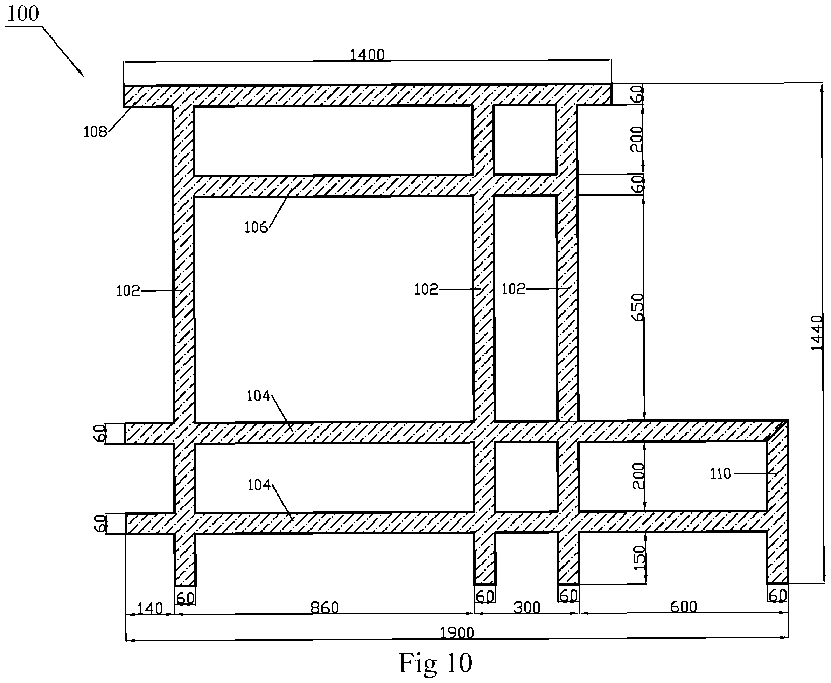

Figure 10 provides measurements for an embodiment of a frame 100 of the present invention with vertical frame posts 102, lower horizontal frame bars 104, upper horizontal frame bar 106, top horizontal frame bar 108, and outer vertical frame post 110. It will be understood that various types of frames may be used and for smaller shifting shaft mechanism 5 a smaller frame or modified support may be used.

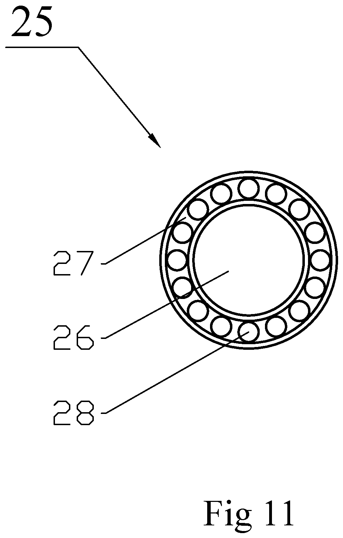

Figure 11 is an embodiment of a fixed plate bearing 25 with bearing hole 26, bearing ring 27 and fixed plate bearing balls 28 of the present invention.

It will be understood that the figures are simplified for ease of describing the invention. The present invention is also scalable, for example, to power a wheelchair versus heavy-duty machinery.

In operation with a gravitation engine 50 of Figure 5a and the shifting shaft mechanism 5 shown in Figures 1,2 and 3, a motor (not shown) at one end of the outer shaft 46 turns the shaft 40 so that the camshaft 20 moves from the first position in Figure 4a, to the second position shown in Figure 4b, 4d and 4e, and to the third position shown in Figure 4c. This movement from first position to second position causes the shaft 40 to drop within the off-centre fixed plate opening 11 and adds kinetic force to the system. When the camshaft 20 is in third position at 180 degrees, the force of the weight 90, which has at the same time moved from 0 to 180 degrees, rotates the hub 60 which rotates the shaft 40 to bring the weight 90 on the rotating wheel 70 back up past 360 degrees. The rotation of the shaft 40 also rotates the camshaft 20 back up to 360 (or 0 degrees) and raises the shaft 40 back within the off-centre fixed plate opening 11. The energy required to turn the rotating wheel 70 is less than the energy produced by the force of gravity on the weight 90 plus the energy from the movement of the rotating wheel 70 caused by the shifting shaft 40 of the shifting shaft mechanism 5.

The fixed off-centre fixed plate opening 11 is off centre of the fixed plate 10. The mobile support wheel 30 rotates in position and the shape of the camshaft 20 rotates counter to the mobile support wheel 30 resulting in an imbalance which creates energy from the first to the second position with the drop of the shaft 40.

Kinetic energy from the drop of the weight 90 from 0 degrees (not shown) to 180 degrees, shown in Figures 5a and 5b, rotates the hub 60 and thereby the shaft 40 which rotates the camshaft 20 from the third position in Figure 4c back to just past the first position in Figure 4a, which raises the shaft 40 to the top again and the cycle repeats, unless stopped or parts break down or parts need cleaning or lubrication. The energy from the drop of the weight 90 from 0 to 180 degrees is enough to turn the rotating wheel 70 and weight 90 from 180 degrees to over 360 degrees. There is an imbalance caused by the mobile support wheel 30 remaining in position and the camshaft 20 turning and shifting the shaft 40 down.

The shift of the shaft 40 in the shifting shaft mechanism 5 is significant enough to result in additional energy. However, this shift is not visible as a movement of the rotating wheel 70 in the embodiment shown in the figures given the relatively large size of the rotating wheel 70 compared to this shifting shaft mechanism 5. As such, the drop of the weight 90 from 0 to 180 degrees and the energy from the shift of the shaft 40 provides enough energy to send the weight 90 back up past 360 degrees plus excess energy over the initial input to start the shaft 40 turning, which excess energy is sent back into the motor or otherwise captured. As necessary, power may be input to keep the rotating wheel 70/shaft 40 turning. A gravitation engine 50 with a shifting shaft mechanism 5 creates excess energy over what is input provided that the masses are carefully balanced for a consistent cycle of motion with simultaneously coordinated positions of the mechanisms in each phase.

While embodiments of the invention have been described in the detailed description, the scope of the claims should not be limited by the preferred embodiments set forth in the examples, but should be given the broadest interpretation consistent with the description as a whole.

## Claims

1. A shifting shaft mechanism comprising a shaft with two shaft ends and a shaft centre, at least two asymmetrically shaped camshafts, at least four fixed plates and at least two mobile support wheels, wherein on each shaft end there is at least one of the camshafts connected to the shaft and positioned between two of the at least four fixed plates which are connected to each other, each of which fixed plates has an off-centre fixed plate opening of greater diameter than the shaft through which the shaft passes through, and one of the at least two mobile support wheels is between and is rotatably connected to two of the at least four fixed plates , and wherein when the shaft rotates, the at least two camshafts rotate and the at least two mobile support wheels rotates in a counter direction.

2. A shifting shaft mechanism comprising a shaft with two shaft ends and a shaft centre, and on each shaft end there is a fixed plate, a camshaft, a fixed plate, a camshaft, and a fixed plate, and wherein each of the camshafts is connected to the shaft and positioned between two fixed plates connected to each other, and each fixed plate has an off-centre fixed plate opening of greater diameter than the shaft through which the shaft passes through, and there is additionally a mobile support wheel for each camshaft rotatably connected to the fixed plates that abuts the respective camshaft, and wherein when the camshafts rotate with the shaft, the mobile support wheels rotate counter to it.

3. The shifting shaft mechanism of claim 2, wherein the camshaft is asymmetrically shaped so that as it rotates counter to the mobile support wheel the shaft will rise and fall within the off-centre fixed plate opening.

4. The shifting plate mechanism of claim 3, additionally comprising a fixed plate bearing rotatably connected on the shaft within the off-centre fixed plate opening of each of the fixed plates and abutting the camshaft.

5. The shifting shaft mechanism of claim 4, additionally comprises a plurality of fixed plate mobile support holes in each fixed plate, and wherein the mobile support wheel is rotatably connected to the fixed plates on either side though a mobile support wheel axle inserted in one of the plurality of fixed plate mobile support holes in the fixed plate on one side, through a hole in the mobile support wheel and in one of the plurality of fixed plate mobile support holes in the fixed plate on the other side.

6. The shifting shaft mechanism of claim 5, wherein the plurality of fixed plate mobile support holes in each fixed plate is nine in two outer rows of three and one middle row of three of the fixed plate mobile support holes spreading outwardly away from the fixed plate opening.

7. The mobile support wheel of claim 1 or 6 in which the mobile support wheels additionally comprise ball bearings.

8. The shifting shaft mechanism of any one of claims 1 to 6, in which the camshaft is comma shaped and measures 62.84 centimetres across the bottom of the comma shaped camshaft and 73.86 centimetres high.

9. The shifting shaft mechanism of any one of claims 1 to 6, in which the camshaft is comma shaped and measures 62.84 centimetres across the bottom of the comma shaped camshaft and 73.86 centimetres high, and the shaft is between 6 and 9 metres long and between 15 and 40 centimetres in diameter.

10. The shifting shaft mechanism of claim 6, wherein the mobile support wheel axles are inserted into one of the fixed plate mobile support holes in the middle row of the fixed plate closest to the shaft end and the adjacent fixed plate, and the mobile support wheel axles are inserted into one of the fixed plate mobile support holes in wither of the two outermost rows of the fixed plate farther from the shaft end and the adjacent fixed plate.

11. The shifting shaft mechanism of claim 10, wherein mobile support wheel axles are inserted into the fixed plate mobile support holes farthest away from the fixed plate openings.

12. The shifting shaft mechanism of any one of claims 1 to 6, additionally comprising a hub connected to the center of the shaft, which hub has a plurality of spokes attached to an outer rotating wheel, and which outer rotating wheel additionally comprises a weight on it.

13. The use of the shifting shaft mechanism of any one of claims 1 to 6.

14. The use in claim 13, for a gravitation engine.

15. The shifting shaft mechanism of claim 3, wherein the mobile support wheel is rotatably connected to the fixed plates though a mobile support wheel axle inserted into a fixed plate mobile support hole below the fixed plate opening in each of the fixed plates nearest to the shaft end and inserted into a fixed plate mobile support hole off centre from the fixed plate opening in each of the fixed plates farthest from the shaft end.
